# FASCICULE DE BREVET EUROPEEN

(11) **EP 2 585 342 B1**
(45) Date de publication et mention de la délivrance du brevet: **02.07.2014**
(21) Numéro de dépôt: 11726898.7
(22) Date de dépôt: 25.05.2011
(51) Int. Cl.: B60R 13/02

(54) **PIECE INTERMEDIAIRE DE FIXATION DE GARNITURE DE VEHICULE**
ZWISCHENBEFESTIGUNGSTEIL FÜR EINE FAHRZEUGVERKLEIDUNG
INTERMEDIATE ATTACHMENT PART FOR VEHICLE TRIMMING

(30) Priorité: 28.06.2010 FR 1055129
(43) Date de publication de la demande: 01.05.2013
(73) Titulaire: Peugeot Citroën Automobiles SA, 78140 Vélizy Villacoublay (FR)
(72) Inventeur: LACOSTE, Arnaud, F-91400 Orsay (FR); MARQUES DOS SANTOS, Luis, Miguel, F-78140 Velizy Villacoublay (FR); THIEBAUD, Fabrice, F-36000 Châteauroux (FR)
(86) Numéro de dépôt international: PCT/FR2011/051180
(87) Numéro de publication internationale: WO 2012/001254

(56) Documents cités:
- JP-A- 2002 059 802
- JP-A- 2002 362 287

## Description

L'invention se situe dans le domaine de l'habillage intérieur de véhicule. Plus précisément, l'invention se situe dans le domaine de la pose et de la fixation des garnitures internes de véhicules. En particulier l'invention concerne la fixation de deux pièces de garniture et leur positionnement relatif.

Les éléments d'habillage de l'intérieur, ou garnitures, d'un véhicule par exemple d'un véhicule automobile sont généralement des panneaux décoratifs souples en tissu ou rigides en plastique. Pour des raisons esthétiques, les garnitures doivent pouvoir être fixées à la structure du véhicule sans que les moyens de fixation utilisés soient visibles par l'utilisateur. Par ailleurs, pour des raisons de sécurité, leur positionnement doit être précis puisque, par exemple, la mise en oeuvre de coussins gonflables latéraux pourrait être gênée par un mauvais positionnement des garnitures. Enfin pour des raisons de qualité perçue par l'utilisateur, le jeu entre les différentes pièces de garniture doit être de préférence nul ou du moins constant, et les différentes pièces doivent être correctement alignées. L'alignement des garnitures se fait au niveau des bords adjacents aux bords d'extrémités formant la ligne de jonction entre les deux pièces.

Le document FR2888547 décrit l'agencement d'un élément d'habillage sur un panneau de porte de véhicule. L'élément d'habillage de porte, généralement rigide, est fixé à la structure du véhicule par des agrafes au niveau de ses parties haute et basse. L'agencement est étudié pour permettre de limiter le déplacement de l'élément d'habillage en cas de choc exercé sur une paroi extérieure du véhicule. Un tel agencement répond aux critères de sécurité en permettant notamment de ne pas former d'élément saillant en cas de choc. Mais un tel document ne renseigne pas sur la gestion de l'alignement de deux pièces différentes de garniture.

Une solution est apportée par le document EP0780268 qui présente quant à lui un système de fixation sur un support de deux pièces de garnitures, par exemple les deux pièces de la garniture du pied milieu du véhicule. Ces deux pièces sont rigides et assemblées entre elles en ne laissant apparaître qu'une ligne de jonction. Elles sont fixées à la structure du véhicule par leurs extrémités opposées à la ligne de jonction au moyen de vis. Elles sont également fixées au support au niveau de la ligne de jonction par un système d'agrafe. Afin d'assurer leur alignement, seule la première garniture est fixée directement sur le support au niveau de la ligne de jonction, la seconde garniture est quant à elle agrafée sur la première garniture.

Si ce système de fixation est adapté pour la fixation et l'alignement de deux pièces rigides de garniture, il est difficilement mis en oeuvre lorsqu'il s'agit de fixer et d'aligner une pièce de garniture rigide et une pièce de garniture souple comme par exemple la garniture de pavillon. On rappelle au besoin que le pavillon est la partie supérieure de la carrosserie servant de toit. La garniture de pavillon est généralement une garniture en tissu montée collée sur le toit et maintenue sur les bords par les autres pièces de garniture. Par exemple, elle est maintenue au niveau du panneau latéral arrière d'une automobile, appelé custode, par la garniture rigide de ce panneau notamment en insérant une de ses extrémités sous l'extrémité de la garniture de custode. Il a été constaté des problèmes de jeu et d'alignement au niveau des jonctions entre la garniture de pavillon et les garnitures latérales telles que la garniture de custode, la garniture de pied milieu ou la garniture de pied avant, qui diminuent la qualité perçue par l'utilisateur.

Le document JP 2002 059 802 décrit une pièce intermédiaire de fixation selon le préambule de la revendication 1.

L'invention a pour objectif de répondre à ces problèmes de jeu et d'alignement entre deux pièces de garniture en proposant un système de fixation et d'alignement adapté à l'assemblage de tout type de garnitures c'est-à- dire à l'assemblage entre une garniture souple et une garniture rigide aussi bien qu'à l'assemblage de deux garnitures rigides.

A cet effet, l'invention a pour objet une pièce intermédiaire de fixation d'une garniture rigide à une structure de véhicule, ladite garniture rigide étant assemblée à une de ses extrémités à l'extrémité une seconde garniture qu'elle recouvre définissant ainsi une zone de jonction, ladite pièce intermédiaire présentant des moyens de fixation isostatiques à la structure du véhicule, et des moyens de fixation à la garniture rigide, ladite pièce intermédiaire est remarquable en ce qu'elle est dimensionnée pour s'étendre sous la zone de jonction entre les deux garnitures de sorte à ce que la seconde garniture soit intercalée entre ladite pièce intermédiaire et la garniture rigide une fois assemblées, et en ce qu'elle présente en outre des moyens d'alignement pour aligner la seconde garniture par rapport à la garniture rigide, et en ce que la pièce intermédiaire est sensiblement plane et elle présente sur son fond des brides de maintien de câbles et/ou de tuyaux destinés à passer entre ladite pièce intermédiaire et la garniture rigide.

De préférence, la seconde garniture est une garniture souple. C'est-à-dire que la seconde garniture est en un matériau lui permettant d'être courbée, et éventuellement d'être pliée, sans casser ni s'abîmer.

Dans une mise en oeuvre préférée de l'invention, les moyens d'alignement comprennent au moins un doigt servant de butée, ledit doigt étant positionné dans la zone de jonction des deux garnitures. De préférence, les moyens d'alignement permettent d'aligner la seconde garniture par rapport à la garniture rigide selon les bords adjacents à leurs extrémités faisant la jonction entre les deux garnitures.

Dans une autre mise en oeuvre préférée de l'invention, la pièce intermédiaire présente sur sa partie s'étendant sous la zone de jonction des deux garnitures une protubérance dimensionnée pour coopérer avec la garniture rigide afin de maintenir en place par serrage la seconde garniture qui est placée intercalée entre ladite protubérance et la garniture rigide une fois assemblée.

De préférence, la protubérance est dimensionnée pour définir un espacement avec la garniture rigide légèrement inférieur à l'épaisseur de la seconde garniture de telle sorte à ce que la seconde garniture soit comprimée entre la pièce intermédiaire et la garniture rigide.

Avantageusement, la protubérance s'étend sur une partie seulement de la longueur de la zone de jonction de sorte à définir un passage entre la pièce intermédiaire et la seconde garniture une fois assemblée, le dit passage devant pouvoir permettre le passage de câbles et/ou de tubes, de préférence la protubérance s'étend sur plus de 50 % de la longueur de la zone de jonction.

De manière optionnelle, la protubérance est dimensionnée pour s'étendre légèrement sous la seconde garniture au-delà de la zone de jonction de sorte à servir d'entretoise entre la seconde garniture et la structure du véhicule.

De préférence, le doigt présente une hauteur supérieure à la hauteur de la protubérance.

Selon un autre mode de réalisation de l'invention, les moyens de fixation à la garniture permettent une fixation par clipsage de la garniture rigide sur ladite pièce intermédiaire.

De préférence, la pièce intermédiaire est dimensionnée pour être recouverte en totalité par la garniture rigide ou par l'assemblage de la garniture rigide et de la seconde garniture afin d'être masquée à la vue de l'utilisateur.

Avantageusement, la pièce intermédiaire s'étend sur toute la longueur de la garniture rigide et les moyens de fixation à la garniture sont disposés régulièrement espacés sur toute la longueur, de préférence un des bords longitudinaux de ladite pièce présente un élément de renfort destiné à la rigidifier.

Optionnellement, la pièce intermédiaire est moulée en matériau plastique, de préférence en polypropylène.

L'invention a également pour objet l'utilisation d'une pièce intermédiaire telle que définie ci-dessus pour la fixation d'une garniture rigide de véhicule et sa jonction avec une seconde garniture, de préférence souple.

L'invention a également pour objet un procédé de fixation d'assemblage d'une garniture rigide et d'une seconde garniture comprenant les étapes suivantes :
- fixation sur la structure d'une pièce intermédiaire telle que définie plus haut;
- éventuellement mise en place et fixation de câbles et/ou de tuyaux sur la pièce intermédiaire ;
- mise en position de la seconde garniture sur la pièce intermédiaire par coopération de l'extrémité de la seconde garniture avec les moyens d'alignements de la pièce intermédiaire ;
- fixation de la garniture rigide sur la pièce intermédiaire par clipsage de telle sorte à ce que l'extrémité de la seconde garniture soit prise en sandwich entre la pièce intermédiaire et la garniture rigide.

Comme on l'aura compris à la lecture de cette définition le principe à la base de l'invention consiste à placer le système d'alignement de deux garnitures sur une pièce intermédiaire qui va également servir de support et de fixation à l'une des deux garnitures. L'invention consiste à utiliser une pièce intermédiaire fixée de façon précise à la structure du véhicule comme référentiel commun et comme guide pour l'ajustement entre elles de deux garnitures. En effet, une des garnitures est positionnée précisément par rapport à la pièce intermédiaire par des moyens d'alignement et l'autre y est fixée de façon précise et de telle sorte à maintenir en place la précédente une fois fixée. L'invention consiste à placer une pièce intermédiaire au niveau de la jonction de deux garnitures de sorte à former une base rigide de support sur laquelle se positionnent précisément les extrémités des garnitures et à immobiliser lesdites extrémités des garnitures afin d'éviter tout déplacement de l'une par rapport à l'autre et d'éviter toute formation d'un jeu entre elles. Autrement dit l'invention consiste à rigidifier la zone de jonction entre les deux pièces de garniture. L'invention consiste à définir la position d'une garniture, par exemple une garniture souple, et à la prendre en sandwich entre deux pièces rigides à savoir une garniture rigide et une pièce intermédiaire de support et de fixation de ladite garniture rigide. L'invention consiste à placer une garniture par exemple une garniture souple, et à la coincer entre deux pièces rigides fixées à la structure du véhicule afin de figer leurs positions respectives et éviter toute évolution ultérieure de leur positionnement.

L'invention sera bien comprise et d'autres aspects et avantages apparaitront clairement au vu de la description qui suit donnée à titre d'exemple en références aux planches de dessins annexées sur lesquelles :
- la figure 1 est une représentation schématique présentant le positionnement relatif des différents éléments ;
- la figure 2 est une vue élevée d'une pièce intermédiaire selon l'invention ;
- la figure 3 est une vue de dessous d'une partie de la pièce intermédiaire ;
- la figure 4 est une vue présentant les moyens d'alignement de la pièce intermédiaire pour aligner la seconde garniture ;
- la figure 5 est une vue de profil d'une partie de la pièce intermédiaire telle que posée sur la structure du véhicule et recouverte de la seconde garniture.

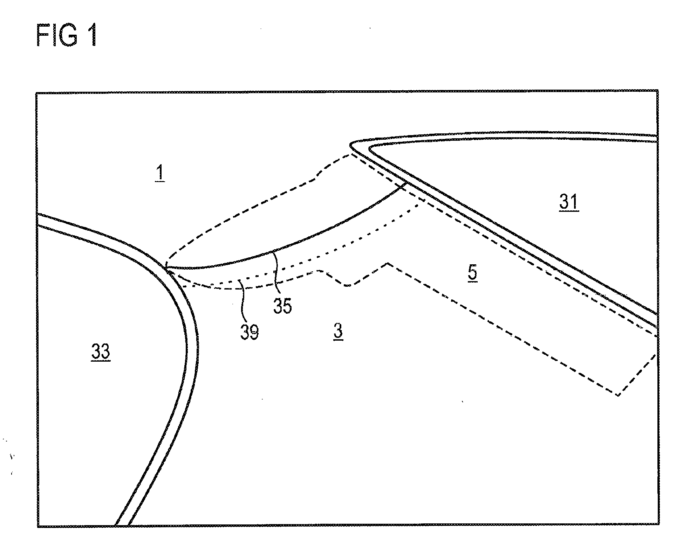

La figure 1 présente le positionnement relatif entre une garniture (1) de pavillon et une garniture (3) de custode aveugle auquel peut s'appliquer la pièce intermédiaire (5) de fixation selon l'invention. La garniture (3) de custode est assemblée à une de ses extrémités à l'extrémité de la garniture (1) de pavillon qu'elle recouvre définissant ainsi une zone de jonction ou de recouvrement. Sur la figure 1, la pièce intermédiaire (5) apparaît en pointillés. L'extrémité (39) de la garniture de pavillon (1) est représentée également en pointillé, puisqu'elle passe sous la garniture rigide (3). L'extrémité (35) de la garniture rigide (3) forme la ligne de jonction visible entre les deux garnitures. La zone de jonction se défini comme étant la zone de chevauchement des deux garnitures (1,3), donc la zone entre leurs extrémités respectives (39, 35). Selon l'invention, la pièce intermédiaire (5) est totalement masquée à la vue de l'utilisateur une fois que les garnitures (1, 3) sont mises en place. Comme on peut le constater, la pièce intermédiaire s'étend sous la zone de jonction des deux garnitures (1,3). De préférence, elle s'étend sous toute la longueur (ou quasiment toute la longueur) de la ligne de jonction (35) entre les deux pièces. On rappelle que, d'une manière générale, la garniture (1) de pavillon est une pièce souple en tissu et la garniture (3) de custode est une pièce rigide en polypropylène revêtue de tissu. La jonction entre la garniture (1) de pavillon et la garniture (3) de custode s'effectue par exemple entre la vitre arrière (31) du véhicule et son ouverture (33) pour la porte latérale arrière. Néanmoins l'utilisation de la pièce (5) de support au niveau de la jonction d'une garniture (3) de custode et d'une garniture (1) de pavillon ne saurait limiter la définition de l'invention. Celle-ci peut en effet être appliquée à la jonction de la garniture du pavillon avec d'autres pièces de garnitures tel que la garniture de pied avant ou de pied milieu ou plus généralement encore à la jonction de tout élément de garniture. Néanmoins comme nous le verrons plus loin, la mise en oeuvre de l'invention implique qu'au moins une deux garnitures soit rigide.

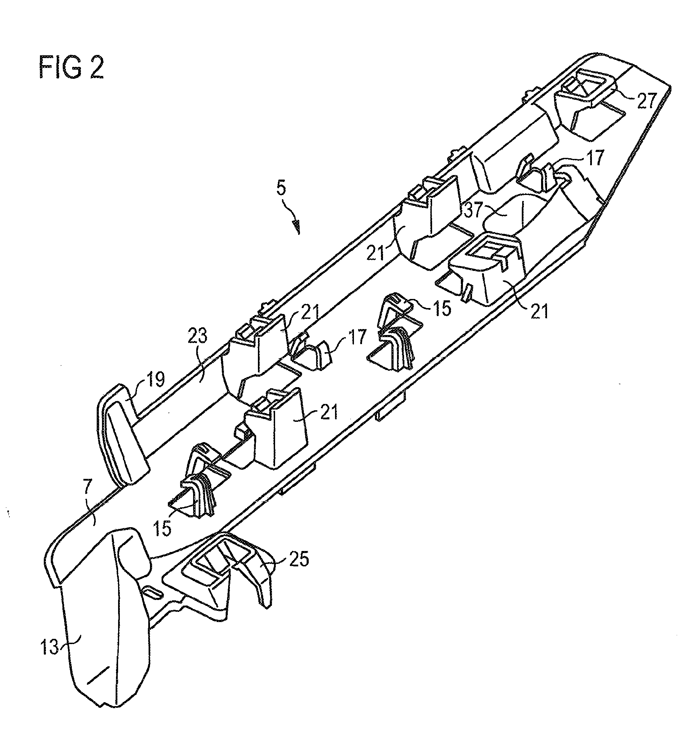

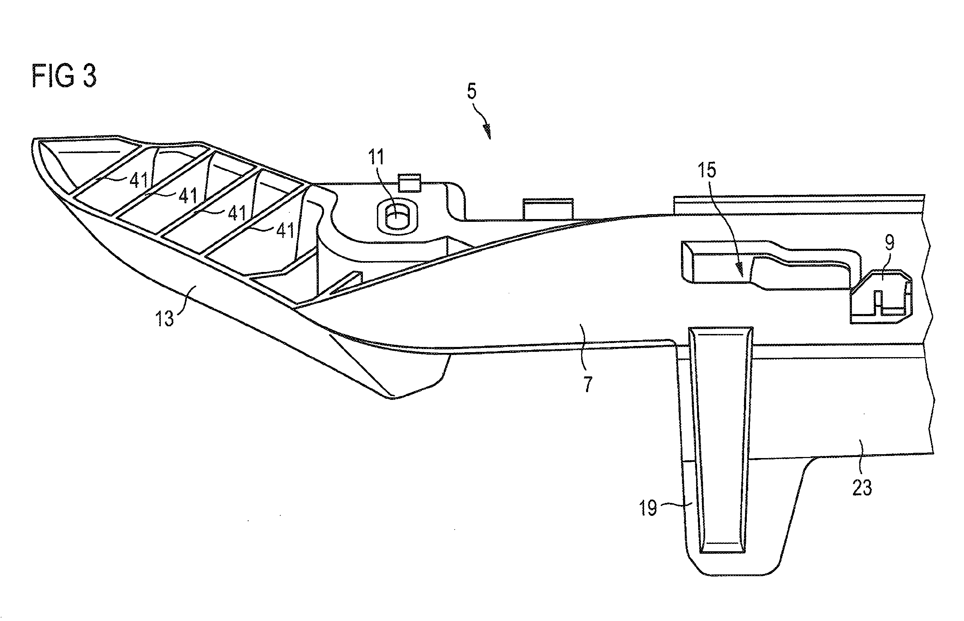

La figure 2 présente un exemple de réalisation d'une pièce intermédiaire (5) de fixation selon l'invention. Il s'agit d'une pièce rigide de préférence en matière plastique par exemple du polypropylène réalisée par moulage. Dans notre exemple la pièce est sensiblement plane et de forme sensiblement parallélépipédique. Néanmoins, l'homme du métier pourra envisager d'autres formes comme par exemple une pièce (5) en forme de U ou de C. La pièce (5) de fixation est destinée à venir se placer entre la structure du véhicule et la garniture rigide qu'elle fixe. C'est pourquoi elle s'étend principalement sous cette garniture rigide, par exemple la garniture de custode, de préférence sur toute la longueur de ladite garniture. Néanmoins comme nous allons le voir, la pièce intermédiaire (5) de fixation peut s'étendre au-delà de la garniture (3) de custode qu'elle soutient et qu'elle fixe de telle sorte à se trouver partiellement sous l'autre pièce de garniture (1) avec laquelle la jonction est recherchée. La pièce intermédiaire (5) de fixation présente un fond (7) posé sur la structure du véhicule et y fixé. La fixation peut se faire de façon très simple. La pièce intermédiaire (5) est placée en appui sur la structure de véhicule par une forme saillante (37) en direction de la structure et maintenue en place par au moins un plot (9) permettant aussi le pré-maintient de la pièce intermédiaire (5). Elle est ensuite bridée à la structure. En effet, ainsi qu'illustré à la figure 3, il est possible de prévoir des plots (9) sur la face de la pièce intermédiaire (5) de fixation en contact avec la structure du véhicule. Ces plots (9) sont destinés à venir s'insérer dans des évidements en forme de trou de serrure formés sur la structure (ou carrosserie) du véhicule. Un tel système de fixation est connu de l'homme du métier et ne sera pas détaillé plus avant. Pour finir la pièce intermédiaire (5) de fixation est maintenue en place par une fixation complémentaire par vis. A cette fin, la pièce (5) de support présente au moins un trou (11) permettant le passage de la vis.

On aura compris que la pièce intermédiaire (5) de fixation est fixée de façon isostatique à la structure du véhicule. Un des avantages de l'utilisation d'une telle pièce intermédiaire (5) est, comme nous le verrons plus loin, qu'elle permet de masquer le système de fixation à la structure puisqu'elle est recouverte intégralement par les garnitures (1,3). Il n'y a donc plus de vis apparentes sur la garniture (3) rigide même aux extrémités opposées à la ligne de jonction avec la seconde garniture (1). On aura compris également que le positionnement de la pièce intermédiaire (5) sur la structure du véhicule est fixe et prédéterminé ce qui implique donc que la garniture (3) rigide a une position fixe aussi.

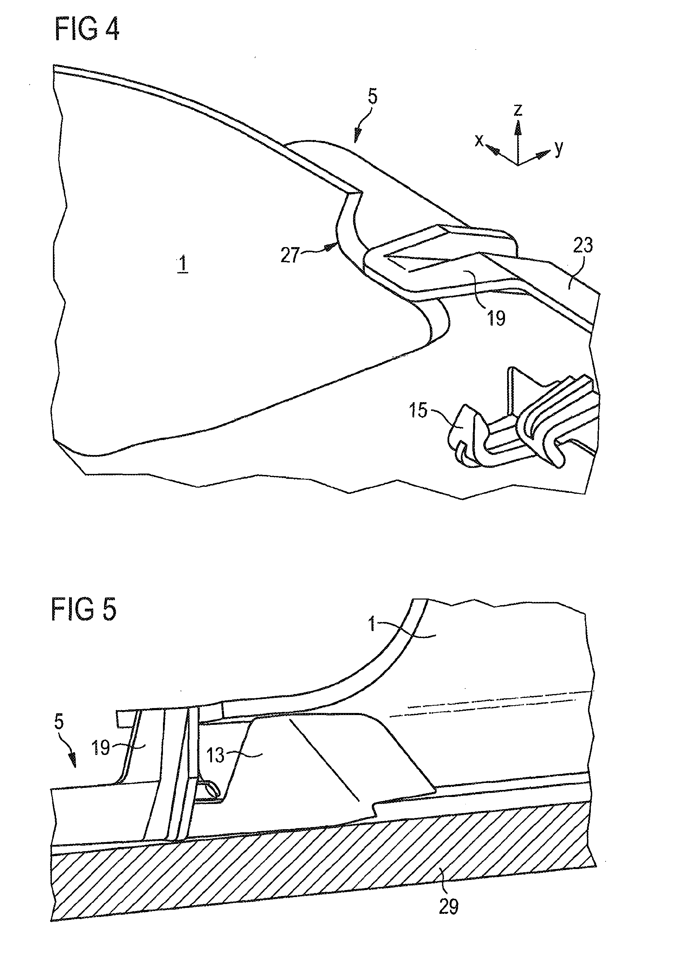

Selon l'invention, la pièce intermédiaire (5) de fixation présente en outre des moyens (19) pour aligner la seconde garniture (1), ou garniture de pavillon, par rapport à la garniture (3) rigide, ou garniture de custode. De préférence, ces moyens d'alignement (19) comprennent au moins une excroissance, par exemple un doigt (19) d'indexage ou d'arrêt s'étendant en direction de l'intérieur du véhicule et destiné à permettre le positionnement de la garniture (1) de pavillon. A cette fin, le doigt (19) est placé au niveau de la zone de jonction. De préférence le doigt (19) est placé dans la zone de jonction entre les deux garnitures (1,3) et la garniture (1) dont le doigt (19) limite le déplacement présente une découpe (27) dans laquelle le doigt (19) s'insère ou se place. La découpe (27) peut être positionnée sur le bord d'extrémité de la seconde garniture (1), sur le bord adjacent au bord d'extrémité faisant la jonction, ou se présenter sous forme de trou à l'extrémité de la garniture (1). Le doigt (19) sert de butée et permet d'ajuster l'alignement latéral des deux garnitures (1, 3) afin d'assurer la continuité de leurs parois latérales et donc améliorer la qualité perçue par l'utilisateur. La butée s'effectue donc dans le plan de la garniture rigide (3) ou plus précisément dans le plan de sa paroi. Le doigt (19) permet d'aligner les deux garnitures (1,3) par rapport à leurs bords adjacents aux bords d'extrémités faisant la jonction entre les deux garnitures (1,3). Comme on l'aura compris la seconde garniture (1), à savoir la garniture de pavillon, n'est pas fixée en tant que telle à la pièce (5) de fixation qui ne lui sert à ce stade que de système d'alignement. La figure 4 illustre le positionnement de la garniture (1) de pavillon. On peut voir comment le doigt (19) d'arrêt de la pièce intermédiaire (5) de fixation se place dans la découpe (27) afin de former une butée limitant le déplacement transversal de la seconde garniture (1), ou garniture de pavillon, par rapport à la pièce intermédiaire (5) et donc par conséquent par rapport à la garniture rigide (3). De préférence, le doigt (19) va bloquer la position de la garniture (1) de pavillon selon la direction Z par rapport au repère du véhicule.

Selon une des caractéristiques de l'invention, la pièce intermédiaire (5) de fixation est posée de sorte à s'étendre sous la zone de jonction des deux garnitures (1,3), et de préférence de part et d'autre de celle-ci.

Selon un mode de réalisation préféré de l'invention, la jonction des deux garnitures (1,3) s'effectue sur la pièce intermédiaire (5) au niveau d'une protubérance (13) s'étendant sur tout ou partie de la longueur de la zone de jonction. Dans un tel cas, le doigt (19) servant de butée présentera une hauteur supérieure à la hauteur de la protubérance (13). La protubérance (13) est dimensionnée pour coopérer avec la garniture (3) rigide afin de maintenir en place par serrage la seconde garniture (1) puisque l'extrémité de cette dernière est placée intercalée entre la pièce intermédiaire (5) et la garniture (3) rigide. En d'autres termes la protubérance (13) va coopérer avec la garniture (3) rigide de custode afin de maintenir en place la garniture (1) de pavillon en la prenant en sandwich. C'est pourquoi de préférence, la protubérance (13) s'étend sur toute la longueur de la zone de jonction.

Toutefois, de manière avantageuse, la pièce intermédiaire (5) peut également servir de support pour le passage des faisceaux électriques, du faisceau d'antenne ou du tuyau d'évacuation du toit ouvrant. La pièce intermédiaire (5) est alors avantageusement plane et présente sur son fond (7) des brides (15) pour le maintien en place du faisceau électrique et/ou des brides pour (17) le maintien en place du tuyau d'évacuation du toit ouvrant. Les câbles et/ou les tuyaux vont donc passer entre ladite pièce (5) intermédiaire et la garniture (3) rigide. En raison des synoptiques de montage, à savoir, en raison du fait que la pièce (5) de fixation est mise en place avant lesdits faisceaux et tuyau, la protubérance (13) ne se poursuivra pas sur la totalité de la longueur de la zone de jonction mais seulement sur une partie afin de laisser un passage pour lesdits faisceaux et tuyau. De préférence la protubérance (13) s'étend sur une portion supérieure à 50 % de longueur de la zone de jonction entre les deux garnitures (1,3). L'homme du métier pourra également envisager de faire passer les faisceaux et le tuyau sous la protubérance (13) afin de pouvoir étendre la surface de contact entre la garniture de pavillon (1) et la protubérance (13) à toute la zone de jonction. Un passage (non représenté), sera alors aménagé sous la protubérance (13) qui se présentera alors comme un pont enjambant les faisceaux et tuyau.

La garniture (3) rigide est alors montée. Elle est fixée sur la pièce intermédiaire (5) par exemple par clipsage. La pièce (5) de fixation présente alors des moyens de fixation (21) aptes à coopérer avec des moyens complémentaires présents sur la face interne, non visible, de la garniture (3). Ces moyens de fixation (21) sont par exemple constitués par des boites de clipsage (21). L'homme du métier pourra prendre en considération tout autre système de fixation à condition qu'il permette une fixation isostatique de la garniture (3) rigide sur la pièce intermédiaire (5). La forme classique de garniture (3) rigide et la coopération entre les moyens de fixation de la pièce (5) intermédiaire et de la garniture (3) permettent de définir un espacement donné entre la structure du véhicule et la paroi de la garniture (3), ou plus précisément entre le fond (7) ou la protubérance (13) de la pièce intermédiaire et la garniture (3) rigide. Cet espacement, donné et défini, est particulièrement utile comme nous l'avons vu pour la prise en sandwich de la seconde garniture (1) ou pour le passage d'éléments tel que des câbles ou des tuyaux sous la garniture (3) rigide.

Aux fins de la fixation de la garniture (3) de custode, la pièce (5) de support pourra présenter une embase (23) servant de zone de renfort et destiné à la rigidifier. Par ailleurs, l'homme du métier pourra envisager de placer un système (25) complémentaire de clispage renforçant la tenue de la garniture (3) en cas de déploiement d'un airbag latéral. Avantageusement la pièce intermédiaire (5) s'étend, comme on l'a vu, longitudinalement sur toute la longueur de la garniture (3) rigide et présente des boites de clipsage régulièrement espacées, par exemple au nombre de 5.

On a vu que lors de sa mise en place la garniture (3) rigide va venir chevaucher la seconde garniture (1) au niveau de la pièce intermédiaire (5), et que plus précisément le chevauchement des garnitures (1, 3) se fait au niveau de la protubérance (13) de la pièce (5) de fixation. La seconde garniture (1) est ainsi prise en sandwich entre les deux éléments rigides que sont la pièce intermédiaire (5) et la garniture (3) de custode. Cette prise en sandwich permet d'assurer le maintien de la garniture (1) de pavillon. Par ailleurs, la jonction entre les deux garnitures (1, 3) est rigidifiée ce qui minimise l'apparition ou la présence d'un jeu entre les garnitures (1,3) au niveau de cette ligne de jonction.

De préférence lorsque la seconde garniture (1) est souple, la protubérance (13) est dimensionnée pour que l'espacement entre la pièce intermédiaire (5) et la garniture (3) rigide soit légèrement inférieur à l'épaisseur de la garniture (1) souple de sorte à la comprimer. De cette façon, le jeu entre les garnitures (1, 3) est pratiquement nul. Par exemple, l'utilisateur ne pourra pas l'élargir en essayant d'y insérer ses doigts. La protubérance (13) doit donc être capable de supporter la pression sans se déformer. C'est pourquoi, ainsi qu'on peut le voir sur la figure 3, on aura avantage à renforcer ou rigidifier la protubérance (13) au niveau de sa face interne creuse par une série de nervures longitudinales (41).

Comme on l'aura compris, la pièce intermédiaire (5) et la garniture (3) rigide forment une mâchoire, un étau, qui immobilise la seconde garniture (1). De préférence, pour des raisons esthétiques, le doigt d'arrêt (19) de la pièce (5) de support est recouvert par la garniture (3) rigide afin d'être masqué à la vue de l'utilisateur. L'ensemble ainsi fixé ne laisse apparaître que la jonction entre les deux garnitures (1, 3). Les moyens (9) de fixation de la pièce (5) de support à la structure du véhicule ou de fixation (21) de la garniture (3) de custode à la pièce (5) de fixation, ou encore les moyens (19) d'indexage de la garniture (1) de pavillon sont masqués à la vue de l'utilisateur.

On notera que la pièce (5) de fixation selon l'invention peut également faire office d'entretoise. Ceci est illustré à la figure 5 où la protubérance (13) est dimensionnée pour s'étendre légèrement sous la seconde garniture (1) au-delà de la zone de jonction. En effet, elle permet de définir un écartement entre les garnitures (1,3) et la structure (29) du véhicule. En particulier on notera que la garniture (1) de pavillon, souple, est alors maintenue à une distance donnée de la structure (29) du véhicule par une structure rigide, en l'occurrence par la protubérance (13) de la pièce (5) de fixation.

L'assemblage ainsi réalisé est tel que la première garniture (1) est bloquée en position et ne peut plus être démontée sans que la garniture (3) rigide ne le soit au préalable.

L'invention ne se limite pas aux modes de réalisation décrits ci-avant, donnés seulement à titre d'exemple, mais englobe toutes les variantes que pourra envisager l'homme du métier dans le cadre de la définition qui en a été donnée. En particulier, l'invention ne se limite pas à l'application de l'invention au niveau de la jonction d'une garniture rigide et d'une garniture souple. Elle peut également être appliquée à la jonction de deux garnitures rigides. Dans un tel cas, l'homme du métier aura avantage à prévoir à l'extrémité de la seconde garniture un léger décrochement par rapport à sa paroi permettant à la seconde garniture de s'insérer sous la garniture rigide fixée à la pièce intermédiaire tout en assurant une continuité entre les parois des deux garnitures.

## Revendications

1. Pièce intermédiaire (5) de fixation d'une garniture (3) rigide à une structure (29) de véhicule, ladite garniture (3) rigide étant destinée à être assemblée à une de ses extrémités à l'extrémité d'une seconde garniture (1) qu'elle recouvre définissant ainsi une zone de jonction, ladite pièce intermédiaire (5) présentant des moyens de fixation isostatiques (9, 11) à la structure du véhicule (29), et des moyens de fixation (21) à la garniture rigide (3), et en ce qu'elle est dimensionnée de manière à pouvoir s'étendre sous la zone de jonction entre les deux garnitures (1, 3) de sorte à ce que la seconde garniture (1) soit intercalée entre ladite pièce intermédiaire (5) et la garniture rigide (3) une fois assemblées, et en ce qu'elle présente en outre des moyens d'alignement (19) permettant d'aligner la seconde garniture (1) par rapport à la garniture rigide (3), **caractérisée en ce qu'**elle est sensiblement plane et qu'elle présente sur son fond (7) des brides (15,17) de maintien de câbles et/ou de tuyaux destinés à passer entre ladite pièce (5) intermédiaire et la garniture (3) rigide.

2. Pièce intermédiaire (5) selon la revendication 1 **caractérisée en ce que** les moyens d'alignement (19) comprennent au moins un doigt (19) pouvant servir de butée, ledit doigt (19) pouvant être positionné dans la zone de jonction des deux garnitures (1,3).

3. Pièce intermédiaire (5) selon l'une des revendications 1 à 2 **caractérisée en ce que** les moyens d'alignement (19) permettent l'alignement de la seconde garniture (1) par rapport à la garniture rigide (3) selon les bords adjacents à leurs extrémités faisant la jonction entre les deux garnitures (1,3).

4. Pièce intermédiaire (5) selon l'une des revendications 1 à 3 **caractérisée en ce qu'**elle présente sur sa partie destinée à s'étendre sous la zone de jonction des deux garnitures (1,3) une protubérance (13) dimensionnée de manière à pouvoir coopérer avec la garniture rigide (3) afin de maintenir en place par serrage la seconde garniture (1) qui est placée intercalée entre ladite protubérance (13) et la garniture rigide (3) une fois assemblée, de préférence la protubérance (13) étant dimensionnée de manière à pouvoir définir un espacement avec la garniture rigide (3) légèrement inférieur à l'épaisseur de la seconde garniture (1) de telle sorte à ce que la seconde garniture (1) soit comprimée entre la pièce intermédiaire (5) et la garniture rigide (3).

5. Pièce intermédiaire (5) selon la revendication 4 **caractérisée en ce que** la protubérance (13) est apte à s'étendre sur une partie seulement de la longueur de la zone de jonction de sorte à définir un passage entre la pièce (5) et la seconde garniture (1) une fois assemblée, ledit passage devant pouvoir permettre le passage de câbles et/ou de tubes, de préférence la protubérance (13) s'étend sur plus de 50 % de la longueur de la zone de jonction.

6. Pièce intermédiaire (5) selon l'une des revendications 4 à 5 **caractérisée en ce que** la protubérance (13) est dimensionnée de manière à pouvoir s'étendre légèrement au-delà de la zone de jonction sous la seconde garniture (1) de sorte à servir d'entretoise entre la seconde garniture (1) et la structure du véhicule (29).

7. Pièce intermédiaire (5) selon l'une des revendications 4 à 6 **caractérisée en ce que** le doigt (19) présente une hauteur supérieure à la hauteur de la protubérance (13).

8. Pièce intermédiaire (5) selon l'une des revendications 1 à 7 **caractérisée en ce que** les moyens de fixation (21) à la garniture (3) permettent une fixation par clipsage de la garniture (3) rigide sur ladite pièce intermédiaire (5).

9. Pièce intermédiaire (5) selon l'une des revendications 1 à 8 **caractérisée en ce qu'**elle est dimensionnée de manière à pouvoir être recouverte en totalité par la garniture (3) rigide ou par l'assemblage de la garniture rigide (3) et de la seconde garniture (1).

10. Pièce intermédiaire (5) selon l'une des revendications 1 à 9 **caractérisée en ce qu'**elle est apte à pouvoir s'étendre sur toute la longueur de la garniture rigide (3) et **en ce que** les moyens de fixation (21) à la garniture (3) sont disposés régulièrement espacés sur toute la longueur, de préférence un des bords longitudinaux de ladite pièce (5) présente un élément de renfort (23) destiné à la rigidifier.

11. Pièce intermédiaire (5) selon l'une des revendications 1 à 10 **caractérisé en ce qu'**elle est moulée en matériau plastique, de préférence en polypropylène.

12. Utilisation d'une pièce intermédiaire (5) selon l'une des revendications 1 à 11 pour la fixation d'une garniture rigide (3) de véhicule et sa jonction avec une seconde garniture (1), de préférence souple.

13. Procédé de fixation d'assemblage d'une garniture rigide (3) et d'une seconde garniture (1) comprenant les étapes suivantes :
- fixation sur la structure (29) d'une pièce intermédiaire (5) selon l'une des revendications 1 à 12 ;
- éventuellement mise en place et fixation de câbles et/ou de tuyaux sur la pièce intermédiaire (5) ;
- mise en position de la seconde garniture (1) sur la pièce intermédiaire (5) par coopération de l'extrémité de la seconde garniture (1) avec les moyens d'alignements (19) de la pièce intermédiaire ;
- fixation de la garniture rigide (3) sur la pièce intermédiaire (5) de telle sorte à ce que l'extrémité de la seconde garniture (1) soit prise en sandwich entre la pièce intermédiaire (5) et la garniture rigide (3).

## Patentansprüche

1. Zwischenbefestigungsteil (5) einer starren Verkleidung (3) an einem Fahrzeugaufbau (29), wobei die starre Verkleidung (3) dazu bestimmt ist, an einem ihrer Enden an dem Ende einer zweiten Verkleidung (1), die sie abdeckt, zusammengefügt zu werden, indem so eine Verbindungszone definiert wird, wobei das Zwischenbefestigungsteil (5) isostatische Befestigungsmittel (9, 11) an dem Fahrzeugaufbau (29) aufweist, und Befestigungsmittel (21) an der starren Verkleidung (3), und dass es so bemessen ist, dass es sich unter der Verbindungszone zwischen den zwei Verkleidungen (1, 3) derart erstrecken kann, dass die zweite Verkleidung (1) zwischen das zwischen Verkleidungsteil (5) und die starre Verkleidung (3) nach dem Zusammenfügen eingefügt ist, und dass es außerdem Fluchtungsmittel (19) aufweist, die es erlauben, die zweite Verkleidung (1) in Bezug auf die starre Verkleidung (3) auszurichten, **dadurch gekennzeichnet, dass** es im Wesentlichen flach ist und auf seinem Grund (7) Flansche (15, 17) zum Halten von Kabeln und/oder Rohrleitungen aufweist, die dazu bestimmt sind, zwischen dem Zwischenverkleidungsteil (5) und der starren Verkleidung (3) durchzugehen.

2. Zwischenverkleidungsteil (5) nach Anspruch 1, **dadurch gekennzeichnet, dass** die Fluchtungsmittel (19) mindestens einen Finger (19) aufweisen, der als Anschlag dienen kann, wobei der Finger (19) in der Verbindungszone der zwei Verkleidungen (1, 3) positioniert sein kann.

3. Zwischenverkleidungsteil (5) nach einem der Ansprüche 1 bis 2, **dadurch gekennzeichnet, dass** die Fluchtungsmittel (19) das Ausrichten der zweiten Verkleidung (1) in Bezug auf die starre Verkleidung (3) entlang der benachbarten Ränder an ihren Enden, die die Verbindung zwischen den zwei Verkleidungen (1, 3) herstellen, erlauben.

4. Zwischenverkleidungsteil (5) nach einem der Ansprüche 1 bis 3, **dadurch gekennzeichnet, dass** es auf seinem Teil, der dazu bestimmt ist, sich unter der Verbindungszone der zwei Verkleidungen (1, 3) zu erstrecken, einen Vorsprung (13) aufweist, der derart bemessen ist, dass er mit der starren Verkleidung (3) zusammenwirken kann, um durch Spannen die zweite Verkleidung (1), die nach dem Zusammenfügen zwischen dem Vorsprung (13) und der starren Verkleidung (3) eingeschoben platziert ist, an Ort und Stelle zu halten, wobei der Vorsprung (13) vorzugsweise derart bemessen ist, dass er einen Raum mit der starren Verkleidung (3), der leicht kleiner ist als die Stärke der zweiten Verkleidung (1), derart definieren kann, dass die zweite Verkleidung (1) zwischen dem Zwischenverkleidungsteil (5) und der starren Verkleidung (3) komprimiert ist.

5. Zwischenverkleidungsteil (5) nach Anspruch 4, **dadurch gekennzeichnet, dass** der Vorsprung (13) geeignet ist, sich auf nur einem Teil der Länge der Verbindungszone derart zu erstrecken, dass es nach dem Zusammenfügen eine Passage zwischen dem Teil (5) und der zweiten Verkleidung (1) definiert, wobei die Passage das Durchgehen von Kabeln und/oder Rohren erlauben muss, wobei sich der Vorsprung (13) vorzugsweise auf wenigstens 50 % der Länge der Verbindungszone erstreckt.

6. Zwischenverkleidungsteil (5) nach einem der Ansprüche 4 bis 5, **dadurch gekennzeichnet, dass** der Vorsprung (13) derart bemessen ist, dass er sich leicht über die Verbindungszone hinaus unter der zweiten Verkleidung (1) derart erstrecken kann, dass er als Abstandshalter zwischen der zweiten Verkleidung (1) und dem Aufbau des Fahrzeugs (29) dient.

7. Zwischenverkleidungsteil (5) nach einem der Ansprüche 4 bis 6, **dadurch gekennzeichnet, dass** der Finger (19) eine Höhe aufweist, die größer ist als die Höhe des Vorsprungs (13).

8. Zwischenverkleidungsteil (5) nach einem der Ansprüche 1 bis 7, **dadurch gekennzeichnet, dass** die Mittel (21) zum Befestigen an der Verkleidung (3) eine Befestigung durch Clipsen der starren Verkleidung (3) auf dem Zwischenverkleidungsteil (5) erlauben.

9. Zwischenverkleidungsteil (5) nach einem der Ansprüche 1 bis 8, **dadurch gekennzeichnet, dass** es derart bemessen ist, dass es vollständig von der starren Verkleidung (3) oder durch das Zusammenfügen der starren Verkleidung (3) und der zweiten Verkleidung (1) abgedeckt werden kann.

10. Zwischenverkleidungsteil (5) nach einem der Ansprüche 1 bis 9, **dadurch gekennzeichnet, dass** es geeignet ist, sich auf der gesamten Länge der starren Verkleidung (3) zu erstrecken, und dass die Mittel (21) zum Befestigen an der Verkleidung (3) regelmäßig beabstandet auf der gesamten Länge angeordnet sind, wobei einer der Längsränder des Teils (5) vorzugsweise ein Verstärkungselement (23), das dazu bestimmt ist, es zu versteifen, aufweist.

11. Zwischenverkleidungsteil (5) nach einem der Ansprüche 1 bis 10, **dadurch gekennzeichnet, dass** es aus einem Kunststoff, vorzugsweise aus Polypropylen, geformt ist.

12. Gebrauch eines Zwischenverkleidungsteils (5) nach einem der Ansprüche 1 bis 11 zum Befestigen einer starren Fahrzeugverkleidung (3) und seinem Verbinden mit einer zweiten Verkleidung (1), die vorzugsweise biegsam ist.

13. Verfahren zur Zusammenfügebefestigung einer starren Verkleidung (3) und einer zweiten Verkleidung (1), das die folgenden Schritte aufweist:
- Befestigen auf dem Aufbau (29) eines Zwischenverkleidungsteils (5) nach einem der Ansprüche 1 bis 12,
- eventuell Anbringen und Befestigen von Kabeln und/oder Rohrleitungen auf dem Zwischenverkleidungsteil (5),
- Positionieren der zweiten Verkleidung (1) auf dem Zwischenverkleidungsteil (5) durch Zusammenwirken des Endes der zweiten Verkleidung (1) mit den Fluchtungsmitteln (19) des Zwischenverkleidungsteils,
- Befestigen der starren Verkleidung (3) auf dem Zwischenverkleidungsteil (5) derart, dass das Ende der zweiten Verkleidung (1) zwischen dem Zwischenverkleidungsteil (5) und der starren Verkleidung (3) ins Sandwich genommen ist.

## Claims

1. An intermediate part (5) for attaching a rigid trimming (3) to a vehicle structure (29), the said rigid trimming (3) being intended to be assembled at one of its ends to the end of a second trimming (1) which it covers, thus defining a junction zone, the said intermediate part (5) having isostatic attachment means (9, 11) to the vehicle structure (29), and attachment means (21) to the rigid trimming (3), and in that it is dimensioned so as to be able to extend beneath the junction zone between the two trimmings (1, 3) such that the second trimming (1) is intercalated between the said intermediate part (5) and the rigid trimming (3) once they are assembled, and in that it has, furthermore, alignment means (19) permitting the second trimming (1) to be aligned with respect to the rigid trimming (3), **characterized in that** it is substantially flat and that it has on its base (7) clips (15, 17) for holding cables and/or pipes intended to pass between the said intermediate part (5) and the rigid trimming (3).

2. The intermediate part (5) according to claim 1, **characterized in that** the alignment means (19) include at least one finger (19) being able to serve as a stop, the said finger (19) being able to be positioned in the junction zone of the two trimmings (1, 3).

3. The intermediate part (5) according to one of claims 1 to 2, **characterized in that** the alignment means (19) permit the alignment of the second trimming (1) with respect to the rigid trimming (3) along the adjacent edges at their ends forming the junction between the two trimmings (1, 3).

4. The intermediate part (5) according to one of claims 1 to 3, **characterized in that** it has on its portion which is intended to extend beneath the junction zone of the two trimmings (1, 3) a protuberance (13) dimensioned so as to be able to cooperate with the rigid trimming (3) so as to hold the second trimming (1) in place by clamping, which is placed in an intercalated manner between the said protuberance (13) and the rigid trimming (3) once assembled, preferably the protuberance (13) being dimensioned so as to be able to define a spacing with the rigid trimming (3) slightly less than the thickness of the second trimming (1), such that the second trimming (1) is compressed between the intermediate part (5) and the rigid trimming (3).

5. The intermediate part (5) according to claim 4, **characterized in that** the protuberance (13) is able to extend over only a portion of the length of the junction zone, so as to define a passage between the part (5) and the second trimming (1) once assembled, the said passage having to be able to permit the passage of cables and/or tubes, preferably the protuberance (13) extends over more than 50% of the length of the junction zone.

6. The intermediate part (5) according to one of claims 4 to 5, **characterized in that** the protuberance (13) is dimensioned so as to be able to extend slightly beyond the junction zone beneath the second trimming (1) so as to serve as a spacer between the second trimming (1) and the structure of the vehicle (29).

7. The intermediate part (5) according to one of claims 4 to 6, **characterized in that** the finger (19) has a greater height than the height of the protuberance (13).

8. The intermediate part (5) according to one of claims 1 to 7, **characterized in that** the attachment means (21) to the trimming (3) permit an attachment by clipping of the rigid trimming (3) on the said intermediate part (5).

9. The intermediate part (5) according to one of claims 1 to 8, **characterized in that** it is dimensioned so as to be able to be totally covered by the rigid trimming (3) or by the assembly of the rigid trimming (3) and of the second trimming (1).

10. The intermediate part (5) according to one of claims 1 to 9, **characterized in that** it is capable of being able to extend over the entire length of the rigid trimming (3) and **in that** the attachment means (21) to the trimming (3) are disposed in a regularly spaced manner over the entire length, preferably one of the longitudinal edges of the said part (5) has a reinforcement element (23) intended to stiffen it.

11. The intermediate part (5) according to one of claims 1 to 10, **characterized in that** it is moulded from plastic material, preferably from polypropylene.

12. A use of an intermediate part (5) according to one of claims 1 to 11, for the attachment of a rigid trimming (3) of a vehicle, and its junction with a second, preferably flexible, trimming (1).

13. A method for attachment of an assembly of a rigid trimming (3) and of a second trimming (1) including the following steps:
- attachment on the structure (29) of an intermediate part (5) according to one of claims 1 to 12;
- if necessary, putting in place and attachment of cables and/or pipes on the intermediate part (5);
- putting into position of the second trimming (1) on the intermediate part (5) by cooperation of the end of the second trimming (1) with the alignment means (19) of the intermediate part;
- attachment of the rigid trimming (3) on the intermediate part (5) such that the end of the second trimming (1) is sandwiched between the intermediate part (5) and the rigid trimming (3).
